(19) Europäisches Patentamt
European Patent Office
Office européen des brevets

(11) **EP 0 467 671 B1**

(12) **EUROPEAN PATENT SPECIFICATION**

(45) Date of publication and mention
of the grant of the patent:
**15.05.1996 Bulletin 1996/20**

(51) Int Cl.6: **G05D 1/10**

(21) Application number: **91306514.0**

(22) Date of filing: **17.07.1991**

(54) **Retry/recovery method in rendezvous manoeuvre**

Retry- und Recoveryverfahren beim Rendezvousmanöver

Procédé de retry/recovery sur la manoeuvre rendez-vous

(84) Designated Contracting States:
**DE FR**

(30) Priority: **18.07.1990 JP 188062/90**

(43) Date of publication of application:
**22.01.1992 Bulletin 1992/04**

(73) Proprietor: **NATIONAL SPACE DEVELOPMENT
AGENCY OF JAPAN
Minato-ku Tokyo (JP)**

(72) Inventors:
• **Kawano, Isao
Tsuchiura-shi, Ibaraki-ken, 300 (JP)**
• **Wakabayashi, Yasufumi
Tsukuba-shi, Ibaraki-ken, 305 (JP)**
• **Nakamura, Hiroyuki
Chousei-gun, Chiba-ken, 299-42 (JP)**
• **Suzuki, Takahiro
Tsukuba-shi, Ibaraki-ken, 305 (JP)**

(74) Representative: **W.P. Thompson & Co.
Coopers Building,
Church Street
Liverpool L1 3AB (GB)**

(56) References cited:
EP-A- 0 338 687          WO-A-87/02797
US-A- 4 106 218          US-A- 4 688 091
US-A- 4 898 349

• R.T. Gavin, "Development of a Cooperative
Operational Rendezvous Plan for Eureca and
other Manoeuvering Shuttle Payloads", 38th
Congress of the International Astronautical
Federation, October 10-17, 1987, Brighton, GB,
IAF-87-218, pages 1-8
• M.C. Eckstein, "Safe Rendezvous Approach to a
Space Station by Impulsive Transfers and
Continuous Thrust Arcs", Proceedings First
European In-Orbit Operations Technology
Symposium, Darmstadt, DE, ESA SP-272,
November 1987, pages 3 - 12
• I. Kawano et al, "In-Orbit Demonstration Concept
for the Space Platform in NASDA",International
Astronautical Federation, IAF 89-17, October
1989, pages 1-11

**EP 0 467 671 B1**

## Description

This invention relates to a rendezvous manoeuvre for guiding a rendezvouing spacecraft to a target spacecraft, and more particularly to a retry/recovery method for restoring an errant rendezvous spacecraft to a reference trajectory for approach to the target spacecraft.

To achieve a trajectory suitable for the docking of spacecraft or the like, trajectory control (called a rendezvous manoeuvre) of a rendezvous spacecraft (called a chaser) is required. Generally, approach of the rendezvous spacecraft to the target spacecraft (called a target) is achieved by utilizing the difference in the period between the two spacecraft due to a difference in altitude between their respective orbits. For example, the rendezvous spacecraft approaches the target spacecraft via a trajectory which has a lower altitude and a shorter period (a greater angular velocity) than that of the target spacecraft. This preset approach trajectory is called a reference trajectory.

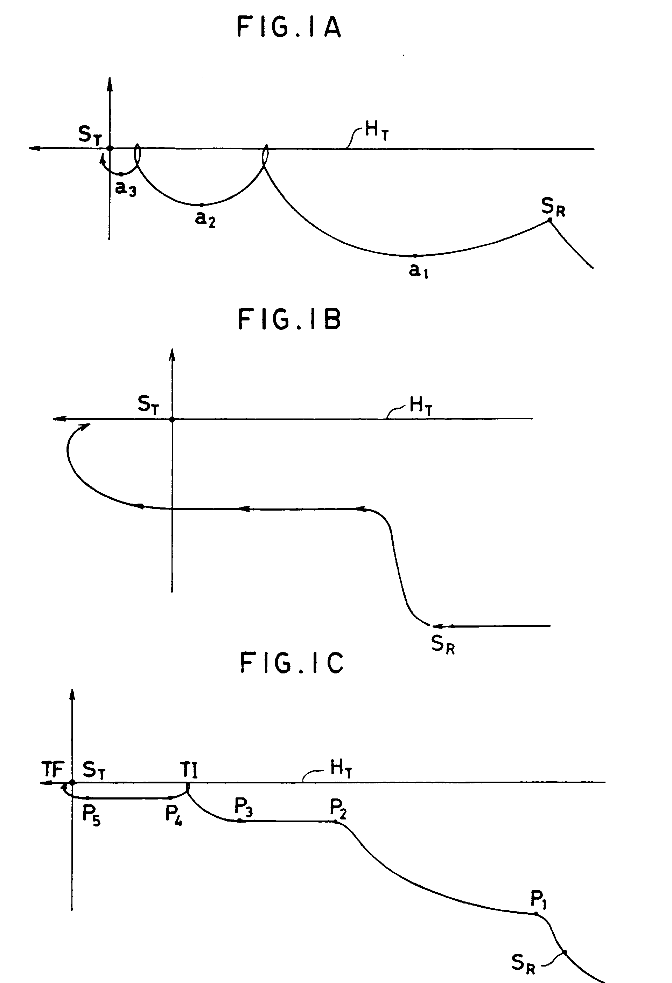

Figs. 1A to 1C of the accompanying drawings are views showing typical examples of the reference trajectory for approach in the rendezvous manoeuvre. Each of these drawings depicts an approach pattern of the rendezvous spacecraft to the target spacecraft in a target-centred, rotating coordinate-system where the origin represents the target spacecraft, the X-axis represents a distance in the direction of phase, and the Y-axis represents a distance in the direction of altitude. In the rendezvous manoeuvre, the rendezvous spacecraft is accelerated or decelerated at the apsis (apogee or perigee) in the direction of phase (the direction of X-axis) so that the apsis altitude of the rendezvous spacecraft gradually approaches the altitude of the target spacecraft. For example, acceleration at the apogee increases the altitude of the perigee, whereas acceleration at the perigee increases the altitude of the apogee.

Fig 1A depicts the reference trajectory in the case where the apogee of a rendezvous spacecraft $S_R$ is set to the altitude $H_T$ of a target spacecraft $S_T$ and the perigee altitude of the rendezvous spacecraft is gradually increased in the order of $a_1$, $a_2$, $a_3$, ... as shown as described in R.T.Gavin, " Development of a Cooperative Operational Rendezvous Plan for Eureca and other Manoeuvering Shuttle Payloads", 38th Congress of the International Astronautical Federation, October 10-17, 1987, Brighton, GB, IAF-87-218, pages 1-8. This is called the A technique . Fig. 1B depicts the reference trajectory in the case where the apogee and perigee altitudes of the rendezvous spacecraft $S_R$ are alternately approached to the altitude $H_T$ of a target spacecraft $S_T$. In other words Fig. 1B depicts the reference trajectory in the case where a circular orbit of the rendezvous spacecraft $S_R$ lower than the altitude $H_T$ of the target spacecraft $S_T$ is approached to that of the target spacecraft $S_T$ as described in M.C. Eckstein, "Safe Rendezvous Approach to a Space station by Impulsive Transfers and Continuous Thrust Arcs", Proceedings First European In-Orbit Operations Technology Symposium, Darmstadt, DE, ESA SP-272 (November 1987), pages 3-12. This is called the B technique. In both of these techniques, the rendezvous spacecraft $S_R$ approaches the target spacecraft $S_T$ using a navigation sensor such as a radar. Fig. 1C depicts the reference trajectory based on the so-called C technique which is a combination of the A and B techniques. In this case, the rendezvous spacecraft is accelerated in the direction of velocity at points $P_1$ to $P_5$, TI and TF as described in I. Kawano et al , In-Orbit Demonstration Concept for the Space Platform in NASDA-Rendezvous and Docking System, International Astronautical Federation, IAF 89-17, October 1989, pages 1-11. Note that TF represents a final point of the trajectory of the rendezvous spacecraft.

Whilst the rendezvous of the spacecraft is intended for in-orbit service such as resupply and/or withdrawal of materials, the launching cost of rendezvous spacecraft is very expensive. When approaching the rendezvous spacecraft to the target spacecraft, therefore, if the rendezvous spacecraft cannot be injected into the reference trajectory for approach for instance because of thruster trouble or a large manoeuvre error, it is required to promptly perform a retry/recovery for the improved rate of mission achievement.

However, the known retry/recovery methods for the rendezvous manoeuvre have the following drawbacks;

Firstly if retry is started after the rendezvous spacecraft has approached the target spacecraft closer than scheduled, then there is the risk that the rendezvous spacecraft may enter into a collision course with respect to the target spacecraft. Also if retry is not promptly instigated, then the rendezvous spacecraft may overtake the target spacecraft, making recovery to the reference trajectory extremely difficult. Once any abnormality occurs, it is difficult to make a judgment on whether or not guidance and control will be normally performed after that.

So far it has been necessary to design the retry/recovery method in a very complex manner, in order to take into account the foregoing problems.

It is an aim of the present invention to overcome the foregoing problems in a conventional retry/recovery method for use with a rendezvous manoeuvre, and to provide a retry/recovery method in a rendezvous manoeuvre which can reliably restore a rendezvous spacecraft to a reference trajectory by simple trajectory control.

In accordance with the present invention, in a rendezvous manoeuvre for approaching a rendezvous spacecraft to a target spacecraft through a reference trajectory for approach which is different in altitude and period from a trajectory of the target spacecraft, if the rendezvous spacecraft deviates from the reference trajectory for approach as a result of a failure in the manoeuvre, the rendezvous spacecraft is restored to the reference trajectory for approach by manoeuvring the rendezvous spacecraft in the direction of altitude after 0.2 revolutions, and then the rendezvous spacecraft is manoeuvred in the direction of phase after another 0.2 revolutions.

2

By additionally manoeuvring the rendezvous spacecraft two times in such a manner as to control its altitude rate after 0.2 revolutions and then control its phase rate after another 0.2 revolutions, as stated above, the rendezvous spacecraft is always restored to the reference trajectory with no fear of entering a collision course, so that retry/recovery operation may be performed promptly and safely. Also, since control points in time (after 0.2 revolutions and 0.4 revolutions) and control amounts of the retry/recovery manoeuvre can be simply set, it is possible for a spacecraft having a guidance and control system with perfect redundancy to easily realise an automatic restoration.

Preferably a manoeuvre expressed by $\Delta V_y = 4\sin \omega t \cdot \Delta \dot{X}_o = 3.827 \Delta \dot{X}_o$ (where w is an angular rate of target's orbit and $\Delta \dot{X}_o$ is an error of the approach velocity) is performed in the direction of altitude, and a manoeuvre $\Delta V_x = -\Delta \dot{X}_o$ is performed in the direction of phase.

The invention is described further hereinafter, by way of example only, with reference to the accompanying drawings, in which:-

Figs. 1A to 1C are views showing typical examples of a reference trajectory for approach in the rendezvous manoeuvre;

Fig. 2 is an explanatory view for explaining the principles of the retry/recovery method in the rendezvous manoeuvre according to one embodiment of the present invention; and

Figs. 3A to 3C are explanatory views showing outlines of the practical retry/recovery method embodying the present invention.

After the distance between a target spacecraft and a rendezvous spacecraft (chaser) has become such that the relative approach distance for rendezvous falls within a range of about 100 km, the following Hill's equation holds in the aforesaid target-fixed coordinate system:

$$\begin{cases} \ddot{x} - 2\omega\dot{y} = a_x \\ \ddot{y} + 2\omega\dot{x} - 3\omega^2 y = a_y \\ \ddot{z} + \omega^2 z = a_z \end{cases}$$

where $2\omega\dot{y}, 2\omega\dot{x}$: Coriolis' accelerations

$3\omega^2 y, \omega^2 z$ : centrifugal accelerations

$a_x, a_y, a_z$ : accelerations in respective directions

In the case of a coasting flight ($a_x = a_y = a_z = 0$), C-W (Clohessy-Wiltshire) solutions are given by equations (1-1) to (1-4):

$$x(t) = x_0 + 6(\omega t - \sin \omega t) y_0$$
$$+ 1 / \omega \cdot (4 \sin \omega t - 3 \omega t) \dot{x}_0$$
$$+ 2 / \omega \cdot (1 - \cos \omega t) \dot{y}_0$$
$$\cdots \cdots (1\text{-}1)$$
$$y(t) = (4 - 3 \cos \omega t) y_0$$
$$+ 2 / \omega \cdot (\cos \omega t - 1) \dot{x}_0$$
$$+ 1 / \omega \cdot \sin \omega t \cdot \dot{y}_0$$
$$\cdots \cdots (1\text{-}2)$$
$$\dot{x}(t) = 6 \omega (1 - \cos \omega t) y_0$$
$$+ (4 \cos \omega t - 3) \dot{x}_0 + 2 \sin \omega t \cdot \dot{y}_0$$
$$\cdots \cdots (1\text{-}3)$$
$$\dot{y}(t) = 3 \omega \sin \omega t \cdot y_0 - 2 \sin \omega t \cdot \dot{x}_0$$
$$+ \cos \omega t \cdot \dot{y}_0$$
$$\cdots \cdots (1\text{-}4)$$

where

| | |
|---|---|
| $x(t)$: | a value of x after t seconds from the reference time |
| $y(t)$: | a value of y after t seconds from the reference time |
| $\dot{x}(t)$: | an x-direction velocity after t seconds from the reference time |
| $\dot{y}(t)$: | a y-direction velocity after t seconds from the reference time |
| $x_0$: | a value of x at the reference time |
| $y_0$: | a value of y at the reference time |
| $\dot{x}_0$: | an x-direction velocity at the reference time |
| $\dot{y}_0$: | a y-direction velocity at the reference time |
| $\omega$: | an angular rate of the target's orbit |

From the above equation (1-1), there holds the following equation (2) at $\omega t = 0.203 \times 2\pi$ (after about 0.2 revolutions):

$$\frac{\partial x}{\partial \dot{x}_0} = \frac{1}{\omega} (4\sin \omega t - 3\omega t) = 0 \qquad (2)$$

Accordingly, regardless of the magnitude of the initial approach velocity $\dot{x}_0$ of the rendezvous spacecraft, the X-direction distance from the rendezvous spacecraft to the target spacecraft after 0.2 revolutions becomes constant. That is, even if the approach manoeuvre fails, then the rendezvous spacecraft is positioned after 0.2 revolutions just below or above the imaginary rendezvous spacecraft which would normally travel along the preset reference trajectory.

Here, the above equations (1-1) to (1-4) are rewritten as follows:

$$
\begin{pmatrix} x(t) \\ y(t) \\ \dot{x}(t) \\ \dot{y}(t) \end{pmatrix} = \Phi(t) \begin{pmatrix} x_0 \\ y_0 \\ \dot{x}_0 \\ \dot{y}_0 \end{pmatrix} \quad \cdots\cdots (3\text{-}1)
$$

$$
\Phi(t) = \begin{pmatrix}
1 & 6(\theta - S_\theta) & \dfrac{1}{\omega}(4S_\theta - 3\theta) & \dfrac{2}{\omega}(1 - C_\theta) \\
0 & (4 - 3C_\theta) & \dfrac{2}{\omega}(C_\theta - 1) & \dfrac{1}{\omega}S_\theta \\
0 & 6\omega(1 - C_\theta) & (4C_\theta - 3) & 2S_\theta \\
0 & 3\omega S_\theta & -2S_\theta & C_\theta
\end{pmatrix}
$$

$$
\cdots\cdots (3\text{-}2)
$$

where

$$
\begin{aligned}
\theta &= \omega t \\
S_\theta &= \sin\omega t \\
C_\theta &= \cos\omega t
\end{aligned}
$$

In the case of $\omega t = 0.203 \times 2\pi$ (given time point $t \equiv t_{0.2}$), the equation (3-2) turns to the following equation (3-3) because of $4S_\theta - 3\theta = 0$.

$$
\Phi(t_{0.2})
$$

$$
= \begin{pmatrix}
1 & 6(\theta - S_\theta) & 0 & \dfrac{2}{\omega}(1 - C_\theta) \\
0 & (4 - 3C_\theta) & \dfrac{2}{\omega}(C_\theta - 1) & \dfrac{1}{\omega}S_\theta \\
0 & 6\omega(1 - C_\theta) & (4C_\theta - 3) & 2S_\theta \\
0 & 3\omega S_\theta & -2S_\theta & C_\theta
\end{pmatrix}
$$

$$
\cdots\cdots (3\text{-}3)
$$

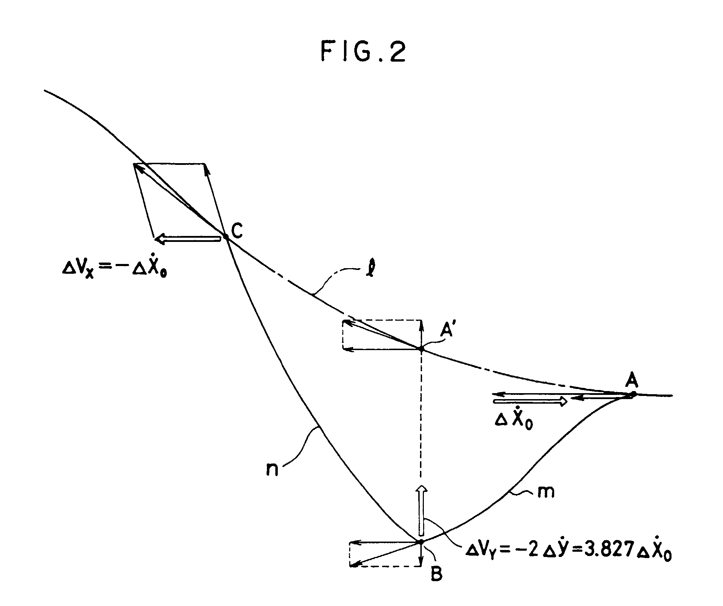

Assuming now that, as shown in Fig. 2, a failure of the approach manoeuvre at a point A causes an approach velocity error of $\Delta \dot{X}_o$, and the travel trajectory of the rendezvous spacecraft is displaced to a trajectory m after the manoeuvre failure. At this time, the error at a point B after 0.2 revolutions is expressed by an equation (4) below:

$$\begin{pmatrix} \Delta x \\ \Delta y \\ \Delta \dot{x} \\ \Delta \dot{y} \end{pmatrix}_{t_{0.2}} = \Phi(t_{0.2}) \begin{pmatrix} 0 \\ 0 \\ \Delta \dot{x}_0 \\ 0 \end{pmatrix}$$

$$= \begin{pmatrix} 0 \\ \dfrac{2}{\omega}(C_\theta - 1) \\ (4 C_\theta - 3) \\ -2 S_\theta \end{pmatrix} \Delta \dot{x}_0$$

$$\cdots\cdots (4)$$

From the above equation (4), it will be found that the X-direction distance is not affected even with the displacement from a reference trajectory $\ell$ due to the manoeuvre failure. In other words, after 0.2 revolutions, the point B is located just above or below (below in the illustrated example) a position A' on the reference trajectory $\ell$.

At the point B after 0.2 revolutions $\Delta V_y$ expressed by the following equation (5) is first applied, as a recovery manoeuvre, to the rendezvous spacecraft in the direction of altitude:

$$\Delta V_Y = -2 \Delta \dot{y}_{0.2} = 4 S_\theta \Delta \dot{X}_0$$
$$(= 3.827 \Delta \dot{X}_0) \tag{5}$$

By adding $\Delta V_y$ shown in the above equation (5), $\Delta V\dot{y}$ in the equation (4) is changed as expressed by an equation (6) below:

$$\Delta \dot{y}_+ = +2 S_\theta \Delta \dot{X}_0 \tag{6}$$

Then, a recovery trajectory resulted from that recovery manoeuvre is indicated by n in Fig. 2.

Further, the error at a point C after another 0.2 revolutions, i.e., after total 0.4 revolutions from the point A of the manoeuvre failure is expressed by an equation (7) below:

$$\begin{pmatrix} \Delta x \\ \Delta y \\ \Delta \dot{x} \\ \Delta \dot{y} \end{pmatrix}_{t_{0.4}} = \Phi(t_{0.2}) \begin{pmatrix} \Delta x \\ \Delta y \\ \Delta \dot{x} \\ \Delta \dot{y} + \end{pmatrix}_{t_{0.2}}$$

$$= \begin{pmatrix} 1 & 6(\theta - S_\theta) & 0 & \dfrac{2}{\omega}(1-C_\theta) \\ 0 & (4-3C_\theta) & \dfrac{2}{\omega}(C_\theta-1) & \dfrac{1}{\omega}S_\theta \\ 0 & 6\omega(1-C_\theta) & (4C_\theta-3) & 2S_\theta \\ 0 & 3\omega S_\theta & -2S_\theta & C_\theta \end{pmatrix}$$

$$\cdot \begin{pmatrix} 0 \\ \dfrac{2}{\omega}(C_\theta-1) \\ (4C_\theta-3) \\ +2S_\theta \end{pmatrix} \cdot \Delta \dot{x}_0 \qquad \cdots\cdots(7)$$

In the above equation (7), the first to fourth terms are given as follows:

$$\text{1st term} = \frac{12}{\omega}(\theta - S_\theta)(C_\theta-1) - \frac{4}{\omega}(C_\theta-1)S_\theta$$

$$= \frac{4}{\omega}(3\theta - 4S_\theta)(C_\theta-1) = 0$$

$$[\because (3\theta - 4S_\theta) = 0]$$

$$\text{2nd term} = \frac{2}{\omega}(4-3C_\theta)(C_\theta-1) + \frac{2}{\omega}(C_\theta-1)(4C_\theta-3)$$

$$+ \frac{2}{\omega}S_\theta^2$$

$$= \frac{2}{\omega}\{(C_\theta+1)(C_\theta-1)+S_\theta^2\}$$

$$= \frac{2}{\omega}(C_\theta^2 - 1 + S_\theta^2) = 0$$

$$\text{3rd term} = -12(C_\theta-1)^2 + (4C_\theta-3)^2 + 4S_\theta^2$$

$$= (-12C_\theta^2 + 24C_\theta - 12 + 16C_\theta^2 - 24C_\theta + 9 + 4S_\theta^2)$$

$$= 4(C_\theta^2 + S_\theta^2) - 3 = 1$$

$$\text{4th term} = 6S_\theta (C_\theta - 1) - 2S_\theta (4C_\theta - 3) + 2S_\theta C_\theta$$
$$= (6-8+2) S_\theta C_\theta + (-6+6) S_\theta = 0$$

Therefore, the following equation (8) is obtained:

$$\begin{pmatrix} \Delta x \\ \Delta y \\ \Delta \dot{x} \\ \Delta \dot{y} \end{pmatrix} = \begin{pmatrix} 0 \\ 0 \\ 1 \\ 0 \end{pmatrix} \Delta \dot{x}_o = \begin{pmatrix} 0 \\ 0 \\ \Delta \dot{x}_o \\ 0 \end{pmatrix} \qquad \cdots \cdots (8)$$

Thus, the point C after 0.4 revolutions locates on the reference trajectory $\ell$, and the rendezvous spacecraft can be restored from the retry trajectory n to the reference trajectory $\ell$ by adding a velocity $\Delta V_x = -\Delta \dot{X}o$ in the same amount as the error of the initial velocity to the rendezvous spacecraft at the point C.

As explained above, the rendezvous spacecraft can be restored to the reference trajectory by performing an additional two manoeuvres after 0.2 and 0.4 revolutions for any manoeuvre error.

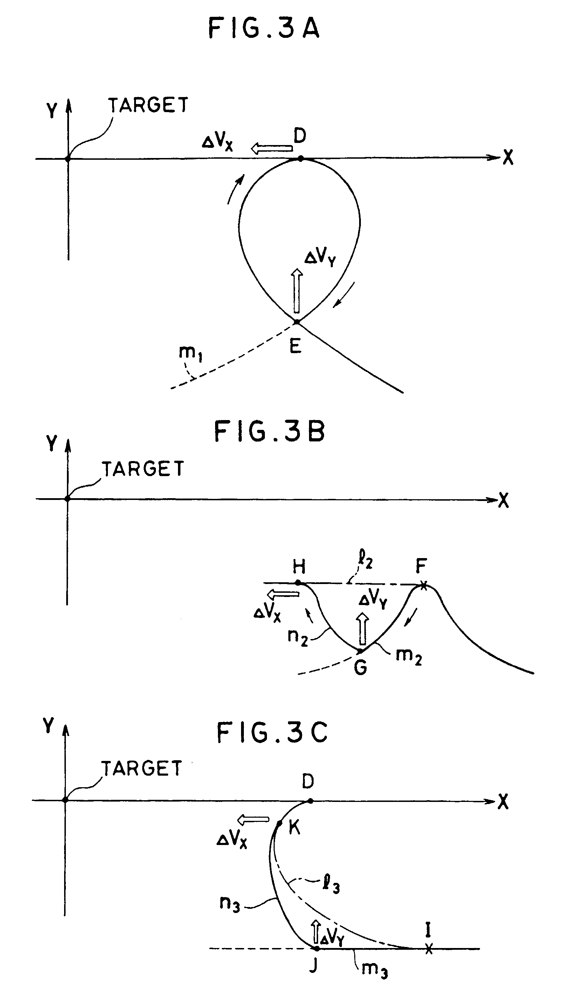

Next, outlines of the retry/recovery method according to an embodiment in which the present invention is applied to a practical rendezvous manoeuvre will be described. Fig. 3A is a view showing a retry to be performed in the case of failure during relative stationary standing. Thus, if the rendezvous spacecraft has failed to stop at a relative station keeping point D and no retry is performed, the rendezvous spacecraft would travel along a trajectory m, indicated by the dotted line. In this case, the retry is performed as follows. First, at a position E after 0.2 from the time when the relative stationary standing has failed at the relative station keeping point D, the rendezvous spacecraft is manoeuvred by $\Delta V_y$ in the direction of altitude. Then, at the time when the rendezvous spacecraft reaches the relative station keeping point D after another 0.2 revolutions, a manoeuvre of velocity $\Delta V_x$ is applied thereto. As a result, the rendezvous spacecraft can be stopped at the relative station keeping point D.

Fig. 3B is a view showing a retry to be performed in case of a failure in transition to a circular reference trajectory. If the rendezvous spacecraft has failed in transition to a reference trajectory $\ell_2$ at a position F and shifts to a failed trajectory $m_2$, the rendezvous spacecraft is first manoeuvred by $\Delta v_y$ in the direction of altitude at a position G after 0.2 revolutions, thereby shifting it from the failed trajectory $m_2$ to a recovery trajectory $n_2$. Then, at the time when the rendezvous spacecraft reaches a position H on the reference trajectory $\ell_2$ after another 0.2 revolutions, a manoeuvre of velocity $\Delta V_x$ is applied thereto. As a result, the rendezvous spacecraft can be shifted in its travel trajectory to a circular reference trajectory $\ell_2$.

Fig. 3C is a view showing a retry to be performed in case of a failure in injection manoeuvre to the relative station keeping point. If the rendezvous spacecraft has failed in a manoeuvre for transition to a reference trajectory $\ell_3$ at a position I along its travel course and shifts to a failed trajectory $m_3$, the rendezvous spacecraft is first manoeuvred by $\Delta V_y$ in the direction of altitude at a position J after 0.2 revolutions, thereby shifting it from the failed trajectory $m_3$ to a retry trajectory $n_3$. Then, at the time when the rendezvous spacecraft reaches a position K on the reference trajectory $\ell_3$ after another 0.2 revolutions, a manoeuvre of velocity $\Delta V_x$ is applied thereto. As a result, the rendezvous spacecraft can be stationary at the relative station keeping point D.

With the retry/recovery method in the rendezvous manoeuvre according to the present invention, as will be apparent from the above, since the rendezvous spacecraft can be restored to the reference trajectory exactly in the same flight time as when the normal manoeuvre would have been followed, there is no need of rescheduling a rendezvous sequence in consideration of such conditions as viewability from ground stations and sunshine. Thus, the present method is a technique with excellent operability.

Since the control direction of the retry/recovery manoeuvre is limited to only the x- and y-directions and usually spacecraft have thrusters acting in the x- and y-directions, the retry/recovery manoeuvre can be implemented without need of attitude change.

Further, since the control points in time (after 0.2 revolutions and after 0.4 revolutions), the control direction, and the control amounts ($\Delta V_y = 4\sin\omega\, t.\Delta\dot{X}_o$, $\Delta V_x = -\Delta\dot{X}_o$) of the retry/recovery manoeuvre can be simply set, an automatic restoration is enabled in those spacecrafts which have guidance and control system with perfect redundancy.

While the above embodiments have been explained in connection with the rendezvous manoeuvre in which the rendezvous spacecraft approaches the target spacecraft via the reference trajectory for approach which is lower in altitude than that of the target spacecraft, the present invention is similarly also applicable to the case where the rendezvous spacecraft approaches the target spacecraft via the reference trajectory for approach which is higher in altitude than that of the target spacecraft.

As described above, according to the present invention, by applying two additional manoeuvres to make control in the direction of altitude after 0.2 revolutions and then make control in the direction of phase after another 0.2 revolutions, the rendezvous spacecraft is always restored to the reference trajectory without entering into a collision course, so that the retry/recovery operation may be performed promptly and safely with a high reliability. Also, since the amount of control in the retry/recovery manoeuvre can be simply set, it is possible for a spacecraft having a guidance and control system with perfect redundancy to easily realise an automatic restoration.

## Claims

1.  A method of retry/recovery in a rendezvous manoeuvre for bringing a rendezvous spacecraft to a target spacecraft via a reference trajectory for approach which is different in altitude and period from a trajectory of said target spacecraft, characterised in that, if said rendezvous spacecraft deviates from the reference trajectory for approach as a result of a failure in the manoeuvre, said rendezvous spacecraft is restored to the reference trajectory for approach by manoeuvring said rendezvous spacecraft in the direction of altitude after 0.2 revolutions, and then said rendezvous spacecraft is manoeuvred in the direction of phase after another 0.2 revolutions.

2.  A method of retry/recovery in a rendezvous manoeuvre according to claim 1, wherein a manoeuvre expressed by $\Delta V_y = 4 \sin \omega t \cdot \Delta \dot{X}_o = 3.827 \, \Delta \dot{X}_o$ (where $\omega$ is an angular rate of target's orbit and $\Delta \dot{X}_o$ is an error of the approach velocity) is performed in the direction of altitude, and a manoeuvre $\Delta V_x = - \Delta \dot{X}_o$ is performed in the direction of phase.

## Patentansprüche

1.  Retry- und Recoveryverfahren bei einem Rendezvousmanöver, um ein Rendezvous-Raumschiff über eine Referenz-Annäherungsflugbahn an ein Zielraumschiff heranzuführen, die sich in Höhe und Periode von einer Flugbahn des genannten Zielraumschiffs unterscheidet, dadurch gekennzeichnet, daß das genannte Rendezvous-Raumschiff, wenn es aufgrund eines Versagens bei dem Manöver von der Referenz-Annäherungsflugbahn abweicht, durch Manövrieren des genannten Rendezvous-Raumschiffs in Höhenrichtung nach 0,2 Umdrehungen auf die Referenz-Annäherungsflugbahn zurückgebracht und dann nach weiteren 0,2 Umdrehungen in Phasenrichtung manövriert wird.

2.  Retry- und Recoveryverfahren bei einem Rendezvousmanöver nach Anspruch 1, wobei ein Manöver, ausgedrückt durch $\Delta V_y = 4 \sin \overline{\omega t} \cdot \Delta \dot{X}_o = 3{,}827 \, \Delta \dot{X}_o$ (wobei $\overline{\omega}$ eine Winkelrate der Umlaufbahn des Ziels und $\Delta X_o$ ein Fehler der Annäherungsgeschwindigkeit ist), in Höhenrichtung und ein Manöver $\Delta V_x = - \Delta \dot{X}_o$ in Phasenrichtung durchgeführt wird.

## Revendications

1.  Procédé de retry / recovery sur une manoeuvre de rendez-vous, servant à rapprocher un véhicule spatial chasseur (ou poursuivant) d'un véhicule cible en utilisant une trajectoire de référence pour la manoeuvre d'approche dont l'altitude et la période sont différentes de celles d'une trajectoire de ce véhicule cible, caractérisée par le fait que si le véhicule spatial qui va effectuer le rendez-vous (c'est-à-dire le véhicule chasseur) s'écarte de la trajectoire de référence utilisée pour l'approche à la suite d'un échec de la manoeuvre, alors on remet le véhicule chasseur sur la trajectoire de référence utilisée pour l'approche en manoeuvrant ce véhicule chasseur dans le sens de l'altitude après 0,2 tour, puis en manoeuvrant ce véhicule chasseur dans le sens de la phase après une rotation complémentaire de 0,2 tour.

2.  Procédé de retry / recovery sur une manoeuvre de rendez-vous, selon la revendication 1, dans laquelle une manoeuvre exprimée par $\Lambda V_y = 4 \sin \omega t \, \Lambda \dot{X}_o = 3{,}827 \, \Lambda \dot{X}_o$ (où $\omega$ représente une vitesse angulaire de la cible sur son orbite et $\Lambda X_o$ représente une erreur de la vitesse d'approche) est effectuée dans le sens de l'altitude, et une manoeuvre $\Lambda V_x = - \Lambda \dot{X}_o$ est effectuée dans le sens de la phase.

## FIG.1A

## FIG.1B

## FIG.1C

# FIG.2

$\Delta V_X = -\Delta \dot{X}_0$

$\ell$

A'

A

$\Delta \dot{X}_0$

n

m

$\Delta V_Y = -2\,\Delta \dot{Y} = 3.827\,\Delta \dot{X}_0$

B

C

# FIG.3A

# FIG.3B

# FIG.3C